# EUROPEAN PATENT SPECIFICATION

(11) **EP 0 370 973 B1**
(45) Date of publication and mention of the grant of the patent: **26.10.1994**
(21) Application number: 89830513.1
(22) Date of filing: 21.11.1989
(51) Int. Cl.: B26D 3/10, C03B 33/07, B32B 17/10, C03C 27/12

(54) **Stripping head for the finishing of a laminate material**
Trimmkopf zur Endfertigung von Verbundscheiben
Dispositif pour déborder un produit stratifié

(30) Priority: 21.11.1988 IT 4857788
(43) Date of publication of application: 30.05.1990
(73) Proprietor: TAI - TECNOLOGIA AUTOMAZIONE INNOVAZIONE - SOCIETA PER AZIONI, I-00040 Pomezia RM (IT)
(72) Inventor: Cirillo, Francesco, I-00152 Roma RM (IT)
(74) Representative: Bazzichelli, Alfredo

(56) References cited:
- EP-A- 0 270 452
- DE-A- 3 626 807
- FR-A- 2 510 029
- GB-A- 2 144 363

## Description

The present invention relates to a stripping head to finish the edge of a laminate material, particularly a glass laminate, such as a car windshield. In this particular case the finished product is formed of two or more sheets of glass held together by a thin layer of plastic material which, interposed between individual sheets, bonds these strongly following a heat treatment. The film of plastic material generally overflows from the outline of the sheet of glass, so that the working process involves a "stripping" step in which all the exceeding parts of plastic are removed by hand from the edge of the sheet of glass.

In the prior art this operation was generally carried out manually by an operator.

To reduce manpower, an attempt has been made to provide a motive member (robot) with a blade programmed to follow the outline of the edge and trim the excess plastic. This approach, however, unavoidably resulted in a breaking of the blade anywhere discrepancies due to working allowance or simple setting error were experienced between the glass and the programmed outline.

EP-A-0270452 describes a device according to the preamble of claim 1, comprising a trimming head of a trimming tool formed with a blade supported in a heated body, means maintaining the parts of the plastic sheet to be trimmed in a position perpendicular to the plane containing the cutting edge of the blade and to the rim of the glass and means to move the trimming head along the glass outline.

The technical problem on which the invention is based arises in fact from the difficulty in following the outline of the sheet edge, which can be complicated in the three spacial dimensions, and in view of non-uniformity of the plastic material in excess both from the geometric point of view and from that of the mechanical strength with respect to shearing force.

This problem is solved according to the present invention by means of a trimming head according to claim 1, in which a support sliding perpendicularly to the operating line is interposed between the motive member and the blade, which allows compensation of a possible deviation from the programmed trajectory or an off-centering of the device. Furthermore, in a trimming head according to the invention, a second trimming blade follows the first blade, driven independently of the robot programmed trajectory and being free to oscillate with respect to the programmed trimming line.

The trimming head of the invention with the above illustrated features enables a trimming to be obtained with a high speed of the head, and a high quality finishing, even on portions with a small radius, and considerably reducing the usual blade wear.

According to one of the embodiments of the invention, the trimming head further comprises a system for the feed-back control of the pushing force by the blades on the glass edge, comprising: a strain-measuring flexure bar connected on the one end to the plate and on the other end to the rod of a pneumatic piston which, together with a spring, forms the elastic pusher means, the flexure of the bar being a function of the pushing force applied by the blades on the edge of the glass; electronic unit means for measuring the value of the pushing force related to the flexure of the flexure bar; a pair of proportional pneumatic valves controlling the pushing force applied by the piston; electronic unit means for controlling the proportional valves; and means for comparing the measured value of the pushing force with a pre-determined value and for producing a differential signal to be transmitted to the electronic unit for controlling the valves and to provide an adjustment of the pushing force during the movement of the trimming head.

The present invention will be described in a preferred embodiment thereof, as illustrated in the accompanying drawings, in which:
figure 1 is a front view, that is with the working line on the plane of the sheet, of the trimming head according to the invention;
figure 2 is a side view of the trimming head;
figure 3 shows the trimming head, the arm and the second blade being removed for the sake of clarity of illustration;
figure 4 shows the trimming head, the first blade and support being removed for the sake of clarity of illustration;
figure 5 shows the trimming head with a modification of the elastic pusher means; and
figure 6 is a flow-sheet showing the control of the pusher means shown in figure 5.

The trimming head according to the invention is supported by a flange 1 which is so designed as to be mounted on a motive means. A representative of motive means is a robot, in particular of ASEA "2000" type, the head being mounted on the wrist thereof.

The following description is referred to the trimming of car windshields, in which the excess film of plastic (polyvinylbutyrral) which overflows from the coupled sheets of glass must be cut away.

The motive means is controlled by a trimming program, which defines the trajectory which the trimming head has to follow, as well as the angulation with respect to the point-by-point angulation of the trimming blade with respect to the operating line.

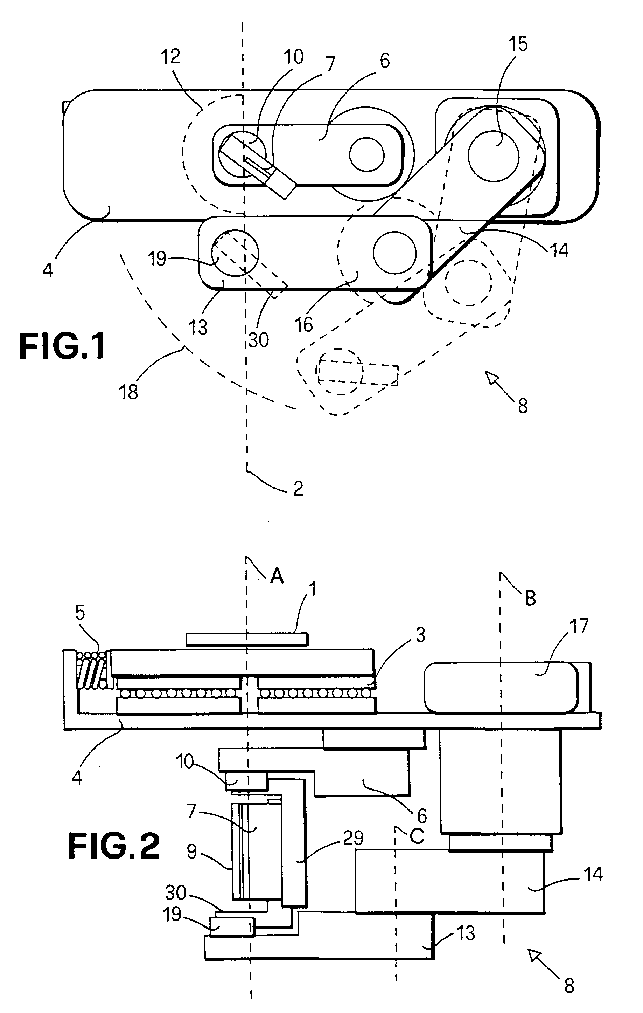

In figure 1 the trimming head according to the invention is shown on a plane comprising an operating line 2 tangential to the trimming line, which in general will be curved.

The trimming line is supported on the flange 1 by means of a sliding system which can be formed by a roller board 3. The movable unit of the head is supported by a plate 4 engaged with the flange 1 so as to slide perpendicularly to the operating line 2.

Between the fixed part (flange 1) and the movable unit (plate 4) a pusher means is placed, illustrated in figure 2 with a spring 5, but which more preferably is a combined system of a spring and a pneumatic cylinder. The pusher means presses the movable unit to the operating line 2 to provide the trimming blade with a pre-stress. The movable plate 4 bears an element 6 supporting the first blade 7 and a swing arm 8 which supports the second blade 9.

The blades 7 and 9 are mounted in respective pneumatic grippers 29, 30, which permit the substitution of said blades in an automatic manner.

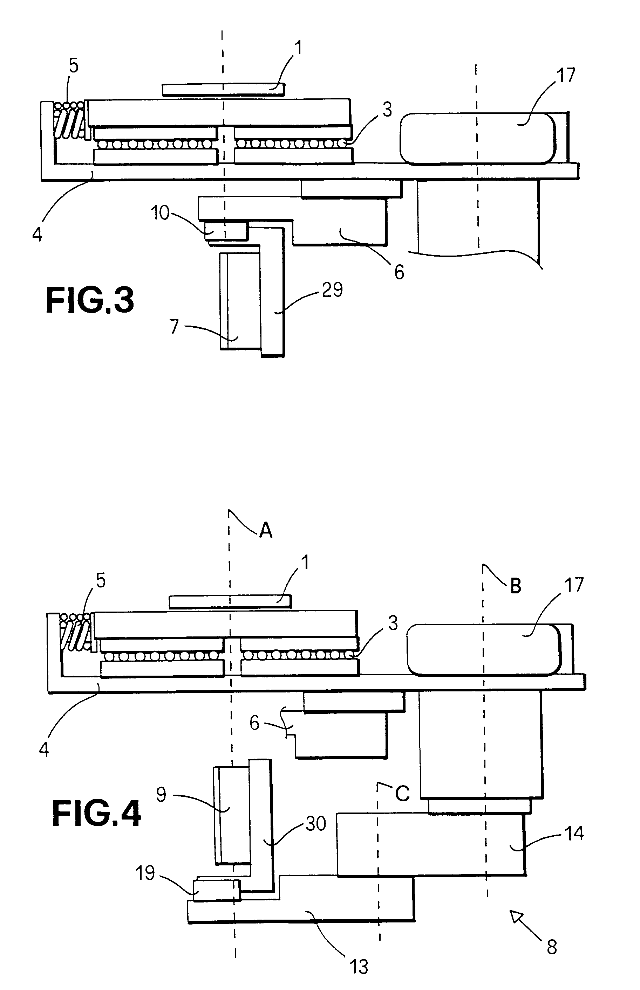

As can be seen in figures 3 and 4, the first blade 7 and the second blade 9 as supported overhang above opposite sides of the operating line 2. The support element 6 mounts the first blade 7 by means of a cylindrical coupling sleeve 10 which enables the angular setting of the blade 7 with respect to the operating line 2 to be set within an angle range of setting adjustment indicated by the referenct numeral 12.

The swing arm 8 is formed of a first member 13, at one end of which the second blade 9 is secured by means of an angularly settable cylindric coupling sleeve 19, and a second member 14. The first and the second member 13 and 14 are journally engaged so as to form a linkage which is in turn journally engaged with the plate 4 by means of a pivot 15. The axis of pivot 15 is indicated in B in figure 2, whereas the axis tangent to the cutting edge of the first blade 7 is indicated in A. As stated hereinbefore, the angular relationship of the first and the second member 13 and 14 can be adjusted about an axis C within a pre-determined angle range indicated in 16 in figure 1, so that an adjustment of this setting angle involves a variation of the distance between the two axes A and B.

Pivot 15 is controlled by an angular actuator or torque motor 17, preferably a pressure air actuator, which pushes the swing arm 8 into the direction towards the operating line 2. The arm 8 consequently is able to swing within a predetermined angle range indicated in 18 in figure 1.

In operation, with respect to the trajectory controlled by the motive means, the first blade 7 can effect a translation integrally with the plate 4, overcoming the load provided by the spring 5. The same translation is followed by the angular actuator 17, as well as the pivot 15 and the second blade 9 through the rigid system consisting of the first and the second member 13 and 14 of the swing arm 8.

During trimming, the reaction force of the sliding unit produced by the laminate edge, establishes a balanced position of the sliding unit due to this reaction and the load of the spring 5. At the same time also the swing arm 8, which rotates about the axis B, will find a stable balance position depending on the interference of the second blade 9 with the edge, which position will depend on the distance from the line A tangent to the cutting edge of the second blade 9 and the axis B.

Consequently, the sliding unit on the whole, and in particular the first trimming blade 7 is capable of effecting a swinging movement perpendicular to the operating line 2, which compensates possible deviations between the stripping trajectory and the real profile of the edge due to an allowance in manufacture or setting of the glass on the apparatus. Additionally, the swing arm 8 with the second blade 9 follows the first blade 7 with an additional degree of freedom with respect to the programmed trajectory.

The important function of the second blade 9 is more emphasized in particular when the glass outline has a concave or convex radius.

In fact, when the outline is rectilinear, the stable balance position of the swing arm 8 depends on the interference of the second blade 9 with the edge, that is the distance from the cutting edge of the blade 9 and axis B. When the glass outline is rectilinear, the larger this distance is, the larger will be the angle at the balance established under the push of the pneumatic actuator 17. Under these conditions during trimming both blades 7 and 9 travel at a constant distance one from the other, in which case the first blade 7 roughly trims and the second blade 9 finishes the edge.

When the head according to the invention is involved in trimming a convex curved glass outline, while the first blade 7 feels the edge position and the motive means provides the head with the required rotation, the second blade 9, by virtue of the pre-set interference, goes on the follow the edge, closing the rotation angle about axis B and progressively increasing its trimming inclination with respect to the operating line 2 until, on going out of the curved section and beginning a new rectilinear section, the pneumatic push is overcome, thus causing the angle to be opened again and bringing the swing arm 8 into a balanced condition as before.

When the head is involved in trimming a concave curved edge, a reverse effect occurs. During the concave trajectory the angle about axis B increases to come back to the original condition in the successive rectilinear section.

Both the above behaviours are in favour of a good finishing made by the second blade 9, which appears to be particularly efficient precisely in correspondence with a curved trajectory and in particular with corners having a very small radius.

It is advisable, in correspondence with these corners, to program the trajectory of the first blade 7 such as to detach from the edge and resume the contact smoothly in a section of different direction, whereas the second blade 9 goes on following the curvature of the edge and finishing it by effect of the push by the pneumatic actuator 17. This avoids in particular an early breaking of the first blade 7 and finishing defects.

It will be noted from the preceding description that a plurality of funcional parameters of the trimming head can be previously set in order to fit to different outlines of a laminate to be treated. The settings are as follows.

The ends of the angle range 18 of the swing arm 8.

The angular position of the first member 13 relatively to the second member 14 of the swing arm 8; this enables the moment applied to the second blade 9 by the pneumatic actuator 17 to be adjusted.

The trimming angle of both blades 7 and 9 which can be set by rotating the coupling sleeves 10 and 19 respectively.

The type of blade to be used, not necessarily the same for the first and the second blade.

The load on the spring 5 which establishes the balance position of the sliding unit.

The torque produced by the pneumatic actuator 17.

The above described functional characteristics make it possible to obtain a perfect finished trimming with a high speed moving head, even on curved sections and considerably reducing the usual wear of the blades.

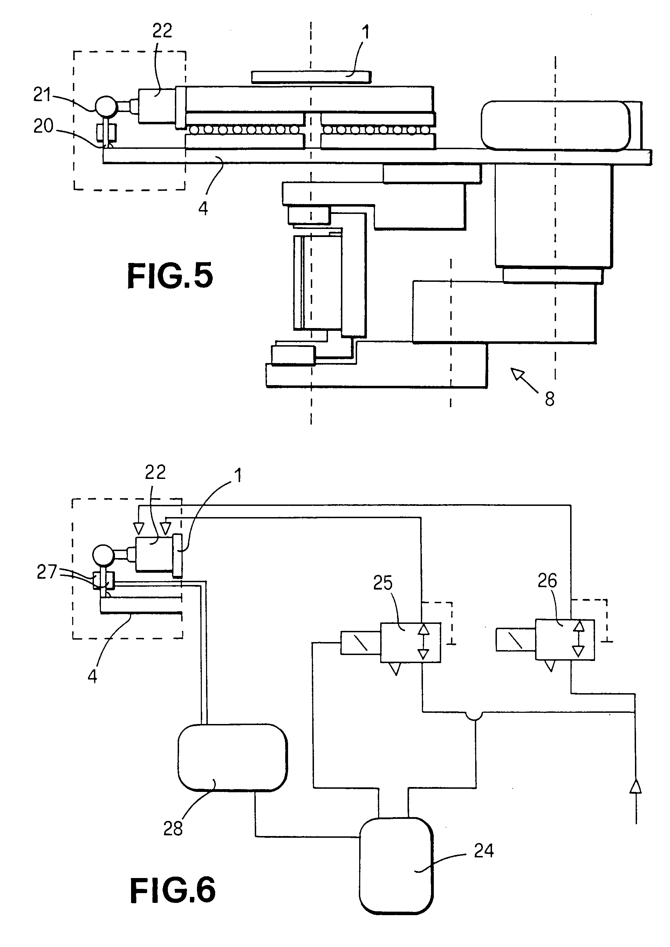

In figures 5 and 6 a particularly preferable alternative arrangement is illustrated of the trimming head of the invention, in which the pneumo-elastic pushing force represented by the spring 5 in the preceding figures, is produced by means of a pneumatic piston, the pushing force of which is controlled by a feed-back control system.

The advantage of this system is a high quality of the trimming finishing and a reduced wear of the trimming blades.

In fact, as the operating speed increases, the centrifugal force and the Coriolis accelleration tend to reduce the push applied by the trimming unit on the glass edge. Moreover, when the component of the weight force is summed to or subtracted from the pre-load force of the elastic system, the dynamic set of the system is changed by a considerable amount, which can jeopardize the operation result.

The feed-back control device of the blade push on the glass edge comprises a strain gauge flexure bar 20 mounted on the trimming head in substitution for the spring 5 illustrated in figures 1 to 4. In particular the flexure bar is secured by forced fit engagement to the plate 4 of the trimming head and by a ball joint 21 to the rod of a pneumatic piston 22 which produces the pre-load, whereas on the other side it acts upon the flange 1.

Referring to figure 6, the device further comprises an electronic unit 23 to measure the pneumatic pushing force and an electronic unit 24 for the control of pneumatic actuators, and of a pair of proportional pneumatic valves 25, 26. On the flexure bar 20 four "whole bridge" connected strain gauges 27 are fixed, which carry out the measurement of the pushing force applied by the trimming blades on the glass edge.

An electronic unit 28 serves the purpose of feeding the strain gauge group 27 and receiving and processing the signal from the same strain gauges 27 and transforming it into a corresponding value of electric voltage.

The voltage value corresponding to the pushing force of the blades on the glass edge is transmitted to the control unit 24. This compares the voltage transmitted by the strain gauge bridge unit 28 with a pre-set voltage value corresponding to the requested pushing force of the blades on the glass edge. The voltage differential provides a measurement of the adjustment to be made to the pushing force of the pneumatic piston. Based on the above mentioned differential, the electronic unit 24 controls a gradual opening or closing of the proportional valves 25, 26 which establish on the active line a pressure value in proportion to the feeding voltage. The two proportional valves 25, 26 are mounted in an electric and pneumatic opposition. This means that in case of a positive variation of the feeding voltage, a pressure increase is produced in one valve on the corresponding active line, whereas in the other valve a decrease is produced, and moreover each valve is connected to one of the two opposite chambers of the pushing piston, which consequently is made sensitive to the pressure differential in these chambers, which differential corresponds consequently to the operating pressure.

Under high speed operation, the pushing force on the glass edge tends to decrease, as due to the centrifugal force, and in a corresponding way, flexure is reduced in the strain gauge bar, so that the outlet voltage of the strain gauge bridge changes and so does, in a corresponding way, the inlet voltage in the electronic unit 24 controlling the proportional valves 25, 26. The change of opening in the valve system finally results in an increase of the operating pressure on the pushing piston and a reset of the pre-set value of the pushing force on the glass edge.

A similar situation is established when the forces (in particular the weight force) are directed to increase the pushing force on the glass edge. In this case, the adjustment produces a decrease and even, if necessary, an inversion of the pushing force by the pneumatic piston and finally the preset value of the pushing force on the glass edge is obtained.

Whereas the invention has been described with particular reference to an embodiment directed to trimming of a car windshield, it should be noted that the above described invention can be applied to a number of different cases, such as trimming of heat or vaccuum formed plastic laminates or again finishing following shearing of metal laminates and the like.

The trimming head according to the present invention is suitable to be used in the cases mentioned above as examples, as well as in all trimming operations showing aspects similar to the above mentioned cases. It can be understood that the design of the apparatus has to be fitted for each case to the process involved in each single application and moreover the trimming head can be moved by a mechanical manipulator other the above described.

## Claims

1. Trimming head for finishing the edge of a sheet of a laminate material, the trimming head comprising a sliding unit with a support plate (4) and being connected to a flange (1) comprised in motive means, the support plate being able to slide relative to the flange along a sliding direction, a first trimming blade (7) being rigidly secured to the support plate with a preset trimming angle with respect to a plane perpendicular to the sliding direction, the sliding unit further comprising elastic pusher means (5) acting between the flange and the support plate and able to exert an elastic force on the support plate in the sliding direction, the motive means being operable to move the flange in such manner, that the sliding direction is kept orientated perpendicular to the edge of the laminate material while the first trimming blade moves along the edge of the laminate material and while the elastic pusher means elastically push the first trimming blade against the edge, characterized in that the trimming head further comprises:
- a pivot (15) with a swing arm (8) journalled for rotation on the support place around an axis parallel to the cutting edge of the first blade;
- a second trimming blade (9) secured to the end of the swing arm so as to follow, in use, the first trimming blade along the edge of the laminate material;
- a constant torque angular actuator (17) mounted on the pivot, angularly biasing the arm and thus, in use, pushing the second blade against the edge of the laminate material, so that during the operation of the motive means the position and angular orientation of the second blade relative to the first blade can change depending on the outline of the edge along which the blades are moving.

2. Trimming head according to claim 1, in which said support plate is integral with an element of a roller board (3), the other element of which is integrally connected with the flange.

3. Trimming head according to claim 1 or 2, in which said elastic pusher means comprise a spring.

4. Trimming head according to claim 3, in which said elastic pusher means further comprise a pneumatic piston for applying a pre-load to said spring.

5. Trimming head according to any of the preceding claims, further comprising a main support (6) rigidly secured to said support plate, said first blade (7) being mounted at one end of said main support with its trimming angle being adjustable.

6. Trimming head according to any of the preceding claims, in which said swing arm (8) is an articulated arm formed of two articulated members (13, 14) journalled one to the other in an angularly adjustable manner, the second member (14) being rigidly connected to said pivot (15) and said second blade (9) being mounted on the free end of the first member (13), so that upon changing the angle between said two members, the distance between the cutting edge of she second blade and said pivot is changed, in order to change the shearing force of the second blade, the torque applied by the actuator being the same.

7. Trimming head according to claim 6, in which said second blade (9) is secured to said first member (13), with its angular orientation with respect thereto being adjustable.

8. Trimming head according to any of the preceding claims, in which said angular actuator (17) is a pneumatic actuator which applies a constant torque the magnitude of which can be previously set.

9. Trimming head according to any of the preceding claims, in which two grippers (29, 30) for mounting said first and second blade are supported overhanging above said main support (6) and said articulated arm (8) respectively, the hanging points of said grippers being placed on opposite sides of the edge to be trimmed and the mounting angle of said grippers being adjustable to change the trimming angle of said plates.

10. Trimming head according to claim 4, further characterized by a feed-back control system for the pushing force of the blades on the edge of the glass, comprising:
a strain-measuring flexure bar (20) connected to said flange (1) on the one end, and to the rod of said pneumatic piston (22) on the other end, the flexure of the bar being a function of the pushing force applied by the blades on the edge of the glass;
electronic unit means (23) for measuring the value of the pushing force related to the flexure of the flexure bar;
a pair of proportional pneumatic valves (25, 26) controlling the pushing force applied by said piston;
electronic unit means (24) for controlling said proportional valves; and
electronic unit means (28) for comparing the measured value of the pushing force with a pre-determined value and producing a differential signal to be transmitted to said electronic unit means (24) for controlling the valves and to provide an adjustment of the pushing force during the movement of the trimming head.

11. Trimming head according to claim 10, in which a plurality of strain gauges (27) are mechanically connected to said flexure bar, said strain gauges being connected in circuit to said feeding and signal receiving and processing electronic unit means (28) for producing a voltage corresponding to said pushing force of the blades.

12. Trimming head according to claim 11, in which said strain gauges are four in number and are connected in a whole bridge circuit.

13. Trimming head according to claim 10, in which said flexure bar is connected by a ball joint to said piston rod and by a forced fit engagement with said plate.

## Patentansprüche

1. Beschneidekopf zur Endbearbeitung der Kante einer Scheibe aus einem Laminatmaterial, wobei der Beschneidekopf eine Gleiteinheit mit einer Trageplatte (4) umfaßt, die mit einem Flansch (1), der zu einer Bewegungseinrichtung gehört, verbunden ist, wobei die Trageplatte in einer Gleitrichtung in bezug auf den Flansch gleiten kann, wobei eine erste Beschneideklinge (7) in einem vorgegebenen Beschneidewinkel in bezug auf eine Ebene senkrecht zu der Gleitrichtung starr an der Trageplatte angebracht ist, wobei die Gleiteinheit des weiteren elastische Druckeinrichtungen (5) umfaßt, die zwischen dem Flansch und der Trageplatte wirken und in der Lage sind, eine elastische Kraft in der Gleitrichtung auf die Trageplatte auszuüben, wobei die Bewegungseinrichtung den Flansch so bewegen kann, daß die Gleitrichtung senkrecht zu der Kante des Laminatmaterials ausgerichtet bleibt, während sich die erste Beschneideklinge an der Kante des Laminatmaterials entlangbewegt, und während die elastischen Druckeinrichtungen die erste Beschneideklinge elastisch an die Kante drücken, **dadurch gekennzeichnet**, daß der Beschneidekopf des weiteren umfaßt:
- einen Drehzapfen (15) mit einem Schwenkarm (8), der an der Trageplatte um eine Achse parallel zur Schneidekante der ersten Klinge drehbar gelagert ist;
- eine zweite Beschneideklinge (9), die an dem Ende des Schwenkarms befestigt ist und so in Funktion der ersten Beschneideklinge an der Kante des Laminatmaterials entlang folgt;
- ein Winkelbetätigungselement (17) mit gleichbleibendem Drehmoment, das an dem Drehzapfen angebracht ist und den Arm in Winkelrichtung drückt und so in Funktion die zweite Klinge an die Kante des Laminatmaterials drückt, so daß sich während der Funktion der Bewegungseinrichtung die Position und Winkelausrichtung der zweiten Klinge in bezug auf die erste Klinge je nach dem Umriß der Kante ändern kann, an der entlang sich die Klingen bewegen.

2. Beschneidekopf nach Anspruch 1, wobei die Trageplatte eine Einheit mit einem Teil einer Walzenplatte (3) bildet, deren anderer Teil fest mit dem Flansch verbunden ist.

3. Beschneidekopf nach Anspruch 1 oder 2, wobei die elastischen Druckeinrichtungen eine Feder umfassen.

4. Beschneidekopf nach Anspruch 3, wobei die elastischen Druckeinrichtungen des weiteren einen Druckluftkolben umfassen, der eine Vorspannung auf die Feder ausübt.

5. Beschneidekopf nach einem der vorangehenden Ansprüche, der des weiteren einen Hauptträger (6) umfaßt, der starr an der Trageplatte angebracht ist, wobei die erste Klinge (7) an einem Ende des Hauptträgers angebracht ist und ihr Beschneidewinkel verstellbar ist.

6. Beschneidekopf nach einem der vorangehenden Ansprüche, wobei der Schwenkarm (8) ein Gelenkarm ist, der aus zwei Gelenkelementen (13, 14) besteht, die auf winklig verstellbare Weise aneinander gelagert sind, wobei das zweite Element (14) starr mit dem Drehzapfen (15) verbunden ist, und die zweite Klinge (9) an dem freien Ende des ersten Elementes (13) angebracht ist, so daß bei Veränderung des Winkels zwischen den beiden Elementen der Abstand zwischen der Schneidekante der zweiten Klinge und dem Drehzapfen verändert wird, um die Scherkraft der zweiten Klinge zu verändern, wobei das durch das Betätigungselement ausgeübte Drehmoment verändert bleibt.

7. Beschneidekopf nach Anspruch 6, wobei die zweite Klinge (9) an dem ersten Element (13) befestigt ist, und ihre Winkelausrichtung in bezug auf selbiges verstellbar ist.

8. Beschneidekopf nach einem der vorangehenden Ansprüche, wobei das Winkelbetätigungselement (17) ein Druckluftbetätigungselement ist, das ein konstantes Drehmoment ausübt, dessen Betrag im voraus eingestellt werden kann.

9. Beschneidekopf nach einem der vorangehenden Ansprüche, wobei zwei Einspannvorrichtungen (29, 30) zur Aufnahme der ersten und der Zweiten Klinge über dem Hauptträger (6) bzw. dem Gelenkarm (8) hängend getragen werden, wobei die Hängepunkte der Einspannvorrichtungen an einander gegenüberliegenden Seiten der zu beschneidenden Kante liegen, und der Anbringungswinkel der Einspannvorrichtungen verstellt werden kann, um den Beschneidewinkel der Klingen zu verändern.

10. Beschneidekopf nach Anspruch 4, des weiteren gekennzeichnet durch ein System zur Regelung der Druckraft der Klingen auf die Kante des Glases, das umfaßt:
einen dehnungsmessenden Biegestab (20), der an dem einen Ende mit dem Flansch (1) verbunden ist, und an dem anderen Ende mit der Stange des Druckluftkolbens (22), wobei die Biegung des Stabes eine Funktion der durch die Klingen auf die Kante des Glases ausgeübten Druckraft ist;
eine Elektronikbaueinheiteinrichtung (23), die den Wert der Druckraft im Zusammhang mit der Biegung des Biegestabes mißt;
ein Paar proportionaler Druckluftventile (25, 26), die die durch den Kolben ausgeübte Druckraft steuern;
eine Elektronikbaueinheiteinrichtung (24), die die proportionalen Ventile steuert; und
eine Elektronikbaueinheiteinrichtung (28), die den Meßwert der Druckraft mit einem vorgegebenen Wert vergleicht und ein Differenzsignal erzeugt, das zu der Elektronikbaueinheiteinrichtung (24) übertragen wird, um die Ventile zu steuern und die Druckraft während der Bewegung des Beschneidekopfes zu regulieren.

11. Beschneidekopf nach Anspruch 10, wobei eine Vielzahl von Dehnungsmeßstreifen (24) mechanisch mit dem Biegestab verbunden sind, wobei die Dehnungsmeßstreifen an die Zuleitungs- und Signalempfangs- sowie -verarbeitungselektronikbaueinheiteinrichtung (28) angeschlossen sind, um eine Spannung zu erzeugen, die der Druckraft der Klingen entspricht.

12. Beschneidekopf nach Anspruch 11, wobei die Anzahl der Dehnungsmeßstreifen vier beträgt und sie in einer Ganzbrückenschaltung verbunden sind.

13. Beschneidekopf nach Anspruch 10, wobei der Biegestab durch ein Kugelgelenk mit der Kolbenstange verbunden ist und durch Preßpassungseingriff mit der Platte.

## Revendications

1. Tête à rogner les bords, destinée à la finition du bord d'une feuille en matériau laminé, la tête à rogner comprenant une unité de coulissement avec une plaque de support (4) et qui est raccordée à une aile (1) incorporée dans des moyens moteurs, la plaque de support pouvant coulisser par rapport à l'aile le long d'une direction de coulissement, une première lame à rogner (7) étant fixée rigidement sur la plaque de support avec un angle de rognage prédéterminé par rapport à un plan perpendiculaire à la direction de coulissement, l'unité coulissante comprenant de plus des moyens poussoirs élastiques (5) agissant entre l'aile et la plaque de support et pouvant exercer une force élastique sur la plaque de support dans la direction de coulissement, des moyens moteurs étant aptes à déplacer l'aile de telle manière que la direction de coulissement est maintenue en orientation perpendiculaire au bord du matériau laminé tandis que la première lame à rogner se déplace le long du bord du matériau laminé, tandis que les moyens poussoirs élastiques exercent une poussée élastiquement sur la première lame à rogner contre le bord, caractérisée en ce que la tête à rogner comprend de plus :
- un pivot (15) avec un bras basculant (8) monté en rotation sur la plaque de support autour d'un axe parallèle au bord de coupe de la première lame;
- une seconde lame à rogner (9) fixée sur l'extrémité du bras basculant de façon à suivre, au cours de l'utilisation, la première lame à rogner le long du bord du matériau laminé;
- un organe d'actionnement angulaire à couple constant (17) monté sur le pivot, sollicitant angulairement le bras et par conséquent, dans l'utilisation, exerçant une poussée sur la seconde lame en opposition au bord du matériau laminé de sorte que pendant le fonctionnement des moyens moteurs, la position et l'orientation angulaire de la seconde lame par rapport à la première lame peuvent être modifiées en fonction du contour du bord le long duquel se déplacent les lames.

2. Tête à rogner selon la revendication 1, dans laquelle la plaque de support est solidaire d'un élément d'une ligne à rouleaux (3), l'autre élément étant solidaire de l'aile.

3. Tête à rogner selon la renvendication 1 ou 2, dans laquelle les moyens poussoirs élastiques comprennent un ressort.

4. Tête à rogner selon la revendication 3, dans laquelle les moyens poussoirs élastiques comprennent de plus un piston pneumatique destiné à appliquer une pré-contrainte sur le ressort.

5. Tête à rogner selon l'une quelconque des revendications précédentes, comprenant de plus un support principal (6) fixé de façon rigide sur la plaque de support, cette première lame (7) étant montée sur une extrémité du support principal avec son angle à rogner ajustable.

6. Tête à rogner selon l'une des quelconques revendications précédentes, dans laquelle le bras basculant (8) est un bras articulé constitué par deux éléments articulés (13, 14) montés l'un par rapport à l'autre d'une manière ajustable angulairement, le second élément (14) étant raccordé de façon rigide au pivot (15) et la seconde lame (9) étant montée sur l'extrémité libre du premier élément (13) de sorte que lors du changement de l'angle entre les deux éléments, la distance entre le bord de coupe de la seconde lame et du pivot est modifiée pour modifier la force de cisaillement de la seconde lame, le moment de couple appliqué par l'organe d'actionnement étant le même .

7. Tête à rogner selon la revendication 6, dans laquelle la seconde lame (9) est fixée sur le premier élément (13) avec son orientation angulaire ajustable.

8. Tête à rogner selon l'une quelconque des revendications précédentes, dans laquelle l'organe d'actionnement angulaire (17) est un organe d'actionnement pneumatique qui applique un moment de couple constant dont la grandeur peut être préalablement réglée.

9. Tête à rogner selon l'une quelconque des revendications précédentes, dans laquelle deux éléments de préhension (29, 30) destinés au montage de la première et de la seconde lames sont suspendus au-dessus du support principal (6) du bras articulé (8) respectivement, les points de suspension de ces éléments de préhension étant placés sur les côtés opposés du bord à rogner et l'angle de montage des éléments de préhension étant réglable permettant de modifier l'angle de rognage des plaques.

10. Tête à rogner selon la revendication 4, caractérisée de plus par un système de commande par rétroaction pour la force de poussée des lames sur le bord du verre, comprenant :
une barre de flexion (20) mesurant les contraintes raccordée à l'aile (1) sur une extrémité et à la tige du piston pneumatique (22) sur l'autre extrémité, la flexion de la barre étant fonction de la force de poussée appliquée par les lames sur le bord du verre ;
moyen unitaire électronique (23) destiné à mesurer la valeur de la force de poussée par rapport à la flexion de la barre de flexion ;
une paire de vannes pneumatiques proportionnelles (25, 26) commandant la force de poussée appliquée par le piston ;
des moyens unitaires électroniques (24) pour contrôler les vannes proportionnelles et,
des moyens unitaires électroniques (28) pour comparer la valeur mesurée de la force de poussée à une valeur prédéterminée et produire un signal différentiel à émettre à destination de l'unité électronique (24) pour commander les vannes et pour fournir un réglage de la force de poussée pendant le mouvement de la tête à rogner.

11. Tête à rogner selon la revendication 10, dans laquelle plusieurs jauges de contrainte (27) sont raccordées mécaniquement à la barre de flexion, ces jauges de contrainte étant raccordées en circuit à l'unité électronique de traitement et de réception de signaux et d'alimentation (28) pour produire une tension correspondant à la force de poussée des lames.

12. Tête à rogner selon la revendication 11, dans laquelle les jauges de contrainte sont au nombre de 4 et sont reliées en un circuit de pont complet.

13. Tête à rogner selon la revendication 10, dans laquelle la barre de flexion est raccordée par un joint sphérique à la tige de piston et par un engagement à ajustage forcé avec la plaque.
